# EUROPEAN PATENT SPECIFICATION

(11) **EP 3 596 005 B1**
(45) Date of publication and mention of the grant of the patent: **19.05.2021**
(21) Application number: 18715311.9
(22) Date of filing: 12.03.2018
(51) Int. Cl.: C01B 3/38, C01B 3/48, C01B 3/56, C01B 13/02

(54) **METHOD AND SYSTEM FOR PRODUCING HYDROGEN USING AN OXYGEN TRANSPORT MEMBRANE BASED REFORMING SYSTEM**
VERFAHREN UND SYSTEM ZUR HERSTELLUNG VON WASSERSTOFF UNTER VERWENDUNG EINES REFORMIERUNGSSYSTEMS AUF DER BASIS EINER SAUERSTOFFTRANSPORTMEMBRAN
MÉTHODE ET SYSTÈME POUR LA PRODUCTION D'HYDROGÈNE UTILISANT UN SYSTÈME DE REFORMAGE À BASE D'UNE MEMBRANE DE TRANSPORT D'OXYGÈNE

(30) Priority: 16.03.2017 US 201762472114 P
(43) Date of publication of application: 22.01.2020
(73) Proprietor: Praxair Technology, Inc., Danbury, CT 06810 (US)
(72) Inventor: CHAKRAVARTI, Shrikar, East Amherst, NY 14051 (US); STUCKERT, Ines, C., Grand Island, NY 14072 (US)
(74) Representative: BRP Renaud & Partner mbB Rechtsanwälte Patentanwälte Steuerberater
(86) International application number: PCT/US2018/021961
(87) International publication number: WO 2018/169846

(56) References cited:
- WO-A1-2015/034565
- WO-A1-2015/084729
- WO-A1-2015/160609
- WO-A2-2007/021911
- US-A1- 2007 289 215

## Description

### Field of the Invention

The present invention relates to a method and system for production of hydrogen utilizing an oxygen transport membrane based reforming system, water gas shift reactor and hydrogen PSA.

### Background of the Invention

Synthesis gas containing hydrogen and carbon monoxide is used for a variety of industrial applications, for example, the production of hydrogen, chemicals and synthetic fuels. Conventionally, the synthesis gas is produced in a fired reformer in which natural gas and steam are reformed in nickel catalyst containing reformer tubes at high temperatures (e.g., 850 °C to 1000 °C) and moderate pressures (e.g., 16 to 30 bar) to produce the synthesis gas. The endothermic heating requirements for steam methane reforming reactions occurring within the reformer tubes are provided by burners firing into the furnace that are fueled by part of the natural gas. In order to increase the hydrogen content of the synthesis gas produced by the steam methane reforming (SMR) process, the synthesis gas can be subjected to water-gas shift reactions to react steam with the carbon monoxide in the synthesis gas. Typically hydrogen is recovered by treating the hydrogen rich stream in a H₂ PSA. The tail gas from the H₂ PSA is utilized as a fuel in the fired reformer to facilitate endothermic reforming reactions.

A well-established alternative to steam methane reforming is the non-catalytic partial oxidation process (POx) whereby a sub-stoichiometric amount of oxygen is allowed to react with the natural gas feed creating steam and carbon dioxide at high temperatures. The high temperature residual methane is reformed through reactions with the high temperature steam and carbon dioxide.

An attractive alternative process for producing synthesis gas is the autothermal reforming (ATR) process which uses oxidation to produce heat and a catalyst to permit reforming to occur at lower temperatures than the POx process.
Similar to the POx process, oxygen is required to partially oxidize natural gas in a burner to provide heat, high temperature carbon dioxide and steam to reform the residual methane. Some steam needs to be added to the natural gas to control carbon formation on the catalyst. However, both the ATR and POx processes require separate air separation units (ASU) to produce high-pressure oxygen, which adds complexity as well as capital and operating costs to the overall process.

When the feedstock contains significant amounts of heavy hydrocarbons, SMR and ATR processes are typically preceded by a pre-reforming step. Pre-reforming is a catalyst based process for converting higher hydrocarbons to methane, hydrogen, carbon monoxide and carbon dioxide. The reactions involved in pre-reforming are generally endothermic. Most pre-reformers on natural gas streams operate in the endothermic area and operate adiabatically, and thus the pre-reformed feedstock leaves at a lower temperature than the feedstock entering the pre-reformer. Another process is the secondary or combined reforming process, which is essentially an autothermal process that is fed the product from a steam methane reforming process. Thus, the feed to a secondary reforming process is primarily synthesis gas from steam methane reforming. Depending on the end application, some natural gas may bypass the SMR process and be directly introduced into the secondary reforming step. Also, when a SMR process is followed by a secondary reforming process, the SMR may operate at a lower temperature, e.g. 650°C to 825°C versus 850°C to 1000°C.

As can be appreciated, the conventional methods of producing a synthesis gas such as have been discussed above are expensive and require complex installations. To overcome the complexity and expense of such installations it has been proposed to generate the synthesis gas within reactors that utilize an oxygen transport membrane to supply oxygen and thereby generate the heat necessary to support endothermic heating requirements of the steam methane reforming reactions. A typical oxygen transport membrane has a dense layer that, while being impervious to air or other oxygen containing gas, will transport oxygen ions when subjected to an elevated operational temperature and a difference in oxygen partial pressure across the membrane.

Examples of oxygen transport membrane based reforming systems used in the production of synthesis gas can be found in United States Patent Nos. 6,048,472; 6,110,979; 6,114,400; 6,296,686; 7,261,751; 8,262,755; and 8,419,827. There is an operational problem with all of these oxygen transport membrane based systems because such oxygen transport membranes need to operate at high temperatures of around 900 °C to 1100 °C. When hydrocarbons such as methane and higher order hydrocarbons are subjected to such high temperatures within the oxygen transport membrane, excessive carbon formation occurs, especially at high pressures and low steam to carbon ratios. The carbon formation problems are particularly severe in the above-identified prior art oxygen transport membrane based systems. A different approach to using an oxygen transport membrane based reforming system in the production of synthesis gas is disclosed in United States Patent No. 8,349,214 which provides an oxygen transport membrane based reforming system that uses hydrogen and carbon monoxide as part of the reactant gas feed to the oxygen transport membrane tubes and minimizes the hydrocarbon content of the feed entering the permeate side of the oxygen transport membrane tubes. Excess heat generated within the oxygen transport membrane tubes is transported mainly by radiation to the reforming tubes made of conventional materials. Use of high hydrogen and carbon monoxide in feed to the oxygen transport membrane tubes addresses many of the highlighted problems with the earlier oxygen transport membrane systems.

US 2007/0289215 A1 relates to a catalytic reactor comprising a plurality of reaction stages with a housing including a plurality of separate cuboid-shaped reactor elements arranged in parallel. Each reactor element is formed by four parallel plates which are sealed at the circumference so as to form a catalytic reaction zone between the innermost plates, surrounded by two combustion zones defined by the two outermost plates which act as an oxygen transport membrane so as to allow oxygen permeate from a separation zone surrounded the reactor elements into the combustion zones to combust with the tail gas supplied from a hydrogen PSA. A reactant stream comprising hydrocarbons and steam is supplied to and reformed in the catalytic reaction zone

WO2007/021911 A2, WO2015/084729 A1, WO2015/034565 A1 and WO2015/160609 A1 also disclose oxygen transport membrane based reforming systems.

Other problems that arise with the prior art oxygen transport membrane based reforming systems are the cost of the oxygen transport membrane modules and the lower than desired durability, reliability and operating availability of such oxygen transport membrane based reforming systems. These problems are the primary reasons that oxygen transport membranes based reforming systems have not been successfully commercialized. Advances in oxygen transport membrane materials have addressed problems associated with oxygen flux, membrane degradation and creep life, but there is much work left to be done to achieve commercially viable oxygen transport membrane based reforming systems from a cost standpoint as well as from an operating reliability and availability standpoint. Also for hydrogen production additional challenges remain. Compared to conventional steam methane reformers, the oxygen transport membrane reforming systems mentioned above produce a synthesis gas containing lower amounts of hydrogen and higher amounts of carbon monoxide (lower hydrogen to carbon monoxide molar ratio); treating this synthesis gas in a hydrogen PSA results in a tail gas having more fuel value than can be directly utilized in the oxygen transport membrane based reforming system.

The present invention addresses the aforementioned problems by providing an improved process for high pressure synthesis gas and hydrogen production using a reactively-driven oxygen transport membrane based system, which comprises of two reactors that can be in the form of sets of catalyst containing tubes - reforming reactor and oxygen transport membrane reactor. Partial oxidation occurs at the permeate (i.e. catalyst containing) side of the oxygen transport membranes and a reforming process facilitated by a reforming catalyst occurs in the reforming reactor in close proximity to the oxygen transport membrane reactor. The partial oxidation process, which is exothermic, and the reforming process, which is endothermic, both occur within the oxygen transport membrane based reforming system and thus the reforming reactor and the oxygen transport membrane reactor have a high degree of thermal integration so that a major portion of the heat released in the oxidation process supplies the heat for the reforming process. Specifically, improvements to the reactively-driven oxygen transport membrane based system include: modifications to the reactively-driven oxygen transport membrane based system to carry out a reforming process in a catalyst filled reforming reactor, and thermal coupling of the reforming reactor with heat provided by the partial oxidation process in the oxygen transport membrane reactor.

A distinctive feature of the oxygen transport membrane based reforming system of the invention is that no portion of the synthesis gas product stream from the reforming reactor is fed to the oxygen transport membrane reactor. Consequently, the pressure of the synthesis gas product is not limited by the operating pressure of oxygen transport membrane reactor. Further improvements to obtain higher hydrogen recovery include subjecting the synthesis gas to water gas shift reactions in a high temperature or medium temperature shift reactor and optionally in a low temperature shift reactor.

### Summary of the Invention

The present invention relates to a method and system for producing hydrogen utilizing an oxygen transport membrane based reforming system as defined in claims 1 and 8, respectively.

No portion of the synthesis gas product stream from the reforming reactor is fed to the reactively driven and catalyst containing oxygen transport membrane reactor, allowing for higher ratios of H₂/CO in the syngas and for the reformers to be operated at higher pressures than otherwise possible with oxygen transport membrane based reforming systems.

### Brief Description of the Drawings

While the specification concludes with claims distinctly pointing out the subject matter that applicants regard as their invention, it is believed that the invention will be better understood when taken in connection with the accompanying drawings in which:

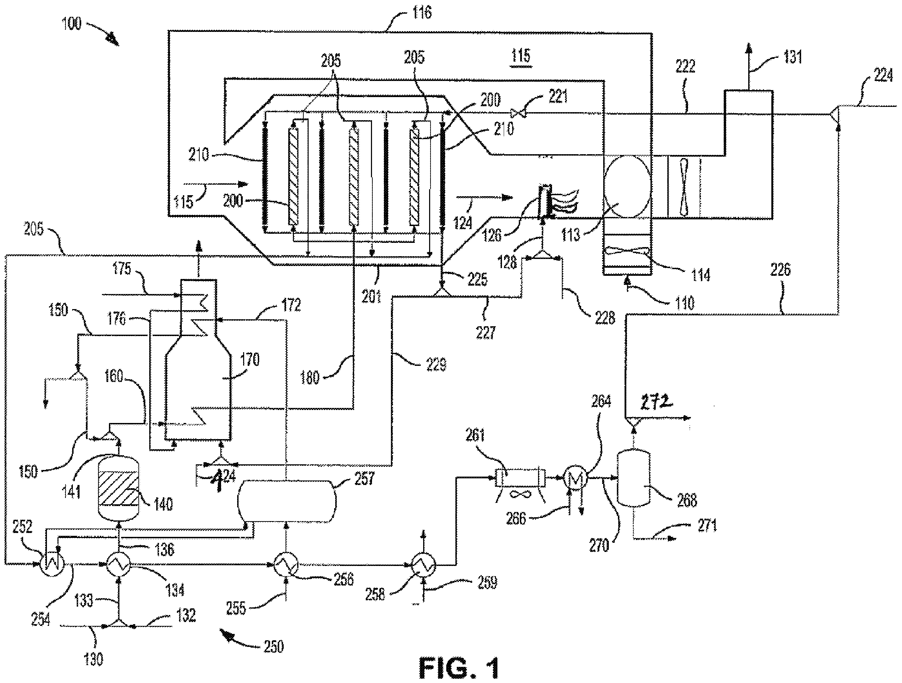

Fig. 1 is a schematic illustration of an embodiment of an oxygen transport membrane (OTM) based reforming system, designed to carry out a reforming process and utilize the oxygen transport membrane reactor as heat source;

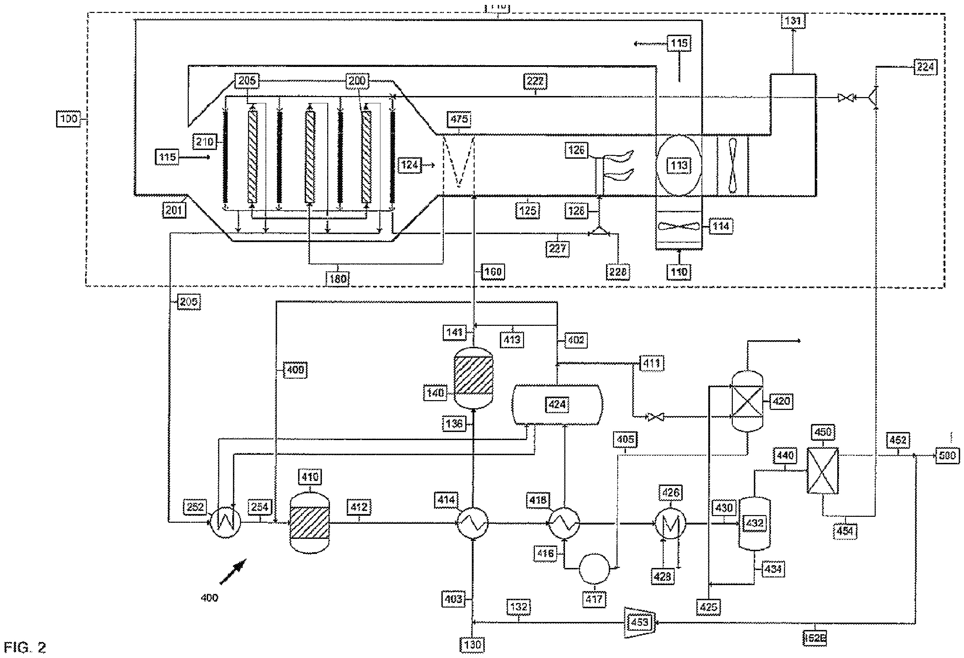

Fig. 2 is a schematic illustration of an embodiment of an oxygen transport membrane (OTM) based reforming system, designed to carry out a reforming process utilizing the oxygen transport membrane reactor as heat source, tailored for hydrogen production utilizing a water gas shift reactor and H₂ PSA;

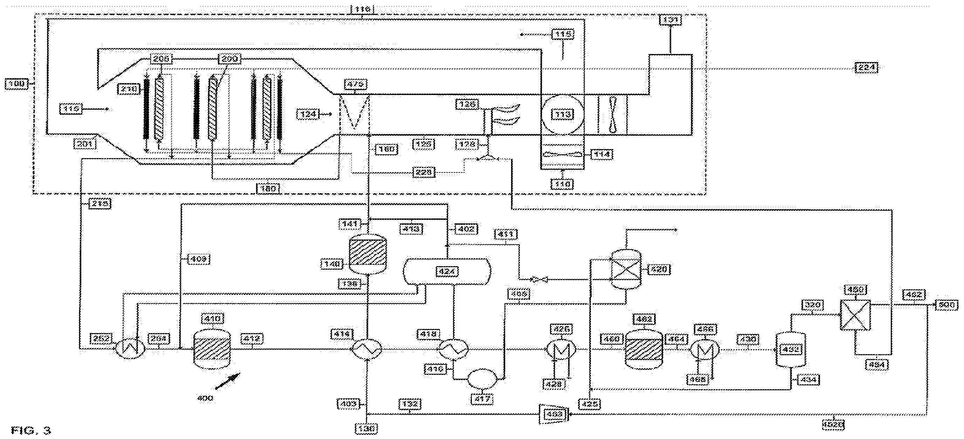

Fig. 3 is a schematic illustration of an alternate embodiment of an oxygen transport membrane (OTM) based reforming system, designed to carry out a primary reforming process within the oxygen transport membrane reactor, tailored for hydrogen production utilizing high temperature water gas shift reactor, low temperature water gas shift reactor, and a H₂ PSA.

### Detailed Description

The present invention relates to a method and system for producing hydrogen utilizing an oxygen transport membrane based reforming system as defined in claims 1 and 8, respectively.

No portion of the synthesis gas product stream from the reforming reactor is fed to the reactively driven and catalyst containing oxygen transport membrane reactor, allowing for higher ratios of H₂/CO in the syngas and for the reformers to be operated at higher pressures than otherwise possible with oxygen transport membrane based reforming systems.

At least a portion of the fuel gas stream required for the oxygen transport membrane reactor is the tail gas stream from the hydrogen PSA, which may be mixed with supplementary light hydrocarbon fuel such as natural gas. The heat generated as a result of the reaction of the fuel gas stream with permeated oxygen in the reactively driven and catalyst containing oxygen transport membrane reactor is transferred: (i) to the reforming reactor; (ii) to the unreformed fuel gas stream present in the reactively driven, catalyst containing oxygen transport membrane reactor; and (iii) to an oxygen depleted retentate stream. The oxygen transport membrane reactor can be configured to utilize all or a portion of the tail gas or a light hydrocarbon containing gas or mixtures thereof. Natural gas or any methane rich gas can be used as a source of the hydrocarbon containing feed stream.

A distinctive feature of the oxygen transport membrane based reforming system of the invention is that no portion of the synthesis gas product stream from the reforming reactor is fed to the reactively driven and catalyst containing oxygen transport membrane reactor. Consequently, the pressure of the syngas leaving the oxygen transport membrane based reforming system is not limited by the operating pressure of the reactively driven and catalyst containing oxygen transport membrane reactor. This distinctive feature allows for syngas generation with higher ratios of H₂/CO and for the reformers to be operated at higher pressures than normally possible, for e.g., from about 10 bar (145 psig) to about 35 bar (507 psig), in another embodiment from about 12 bar (175 psig) to about 30 bar (435 psig). The H₂/CO ratio of the final synthesis gas product produced in the described embodiment is typically from about 2.8 to 5.0. At these pressures hydrogen can be made without the need for a compressor, which is required in configurations that conduct secondary reforming in the OTM reactors. Additionally, the OTM reactors can be operated a lower pressures, as low as 1.83 bar (25 psig), which can ultimately extend membrane lie.

The composition of the synthesis gas product stream depends on several factors including the steam to carbon ratio in the reforming reactor feed, temperature at the exit of the reforming reactor, and the heat transferred from the reactively driven catalyst containing oxygen transport membrane reactor to facilitate endothermic reforming reactions in the reforming reactor. Methane content of the synthesis gas product stream depends on the operating pressure of the reforming reactor and on the S/C ratio of the mixed feed. At a temperature of about 875 °C at the exit of the reforming reactor, operating pressures of about 13 bar (180 psig) and S/C ratio of 3.0, the synthesis gas product stream has a H₂/CO ratio of about 4.5 and methane content of about 2.8 mol% (dry basis). If the operating pressure is increased to about 34 bar (480 psig), the synthesis gas product stream has a H2/CO ratio of about 5.0 and methane content of about 7.5 mole% (dry basis).

Fig. 1 provides a schematic illustration of an embodiment of an oxygen transport membrane based reforming system 100 in accordance with the present invention. As seen therein, an oxygen containing stream 110, such as air, is introduced to the system by means of a forced draft (FD) fan 114 into a heat exchanger 113 for purposes of preheating the oxygen containing feed stream 110. Heat exchanger 113 is preferably a high efficiency, cyclic and continuously rotating ceramic regenerator disposed in operative association with the oxygen containing feed stream 110 and a heated oxygen depleted retentate stream 124. The incoming air feed stream 110 is heated in the ceramic regenerator 113 to a temperature in the range of about 850 °C to 1050 °C to produce a heated air feed stream 115.

The oxygen depleted air leaves the oxygen transport membrane reforming tubes as heated oxygen depleted retentate stream 124 at the same or slightly higher temperature than the heated air feed stream 115. Any temperature increase, typically less than about 30 °C, is attributable to the portion of energy generated by oxidizing reaction of hydrogen and carbon monoxide in the oxygen transport membrane tubes and transferred by convection to the oxygen depleted retentate stream 124.

This oxygen depleted retentate stream 124 is heated back to a temperature of from about 1050 °C to about 1200 °C prior to being directed to the heat exchanger or ceramic regenerator 113. This increase in temperature of the oxygen depleted retentate stream 124 is preferably accomplished by use of a duct burner 126, which facilitates combustion of a fuel stream 128 using some of the residual oxygen in the retentate stream 124 as the oxidant. Though not shown, an alternative means is to combust the fuel stream 128 with a separate air stream in a conventional burner and then mix the hot flue gas with the oxygen depleted retentate stream 124. In the ceramic heat exchanger or regenerator 113, the heated, oxygen depleted retentate stream 124 provides the energy to raise the temperature of the incoming feed air stream 110 from ambient temperature to a temperature from about 850 °C to about 1050 °C. The resulting cold retentate stream exiting the ceramic heat exchanger, typically containing less than about 5% oxygen, leaves the oxygen transport membrane based reforming system 100 system as exhaust gas 131 at a temperature of around 150 °C.

Although not shown in Fig. 1, an alternate embodiment of the oxygen transport membrane based reforming system 100 could dispose the duct burner and fuel stream upstream of the reactors in intake duct 116. Such arrangement would allow use of a smaller regenerator 113, less severe operating conditions for the regenerator 113 and possibly enable the regenerator to be built with cheaper materials.

The hydrocarbon containing feed stream 130, preferably natural gas, to be reformed is typically mixed with a small amount of hydrogen or hydrogen-rich gas 132 to form a combined hydrocarbon feed 133 and then preheated to around 370 °C in heat exchanger 134 that serves as a feed preheater, as described in more detail below. Since natural gas typically contains unacceptably high level of sulfur species, the hydrogen or hydrogen-rich gas 132 is added to facilitate desulfurization. Preferably, the heated feed stream 136 undergoes a sulfur removal process via device 140 such as hydro-treating to reduce the sulfur species to H₂S, which is subsequently removed in a guard bed (not shown) using material like ZnO and/or CuO. The hydro-treating step also saturates any alkenes present in the hydrocarbon containing feed stream. Further, since natural gas generally contains higher hydrocarbons that will break down at high temperatures to form unwanted carbon deposits that adversely impact the reforming process, the natural gas feed stream is preferably pre-reformed in an adiabatic pre-reformer (not shown), which converts higher hydrocarbons to methane, hydrogen, carbon monoxide, and carbon dioxide. Also contemplated but not shown is an embodiment where the pre-reformer is a heated pre-reformer that may be thermally coupled with oxygen transport membrane based reforming system.

Superheated steam 150 is added to the desulfurized hydrocarbon feed stream 141, as required, to produce a mixed feed stream 160 with a steam to carbon ratio from about 1.0 to about 3.0, and more preferably from about 1.5 to about 3.0. The superheated steam 150 is preferably at a pressure from about 15 bar to about 80 bar and at a temperature from about 300 °C to about 600 °C and generated in a fired heater 170 using a source of process steam 172. As seen in Fig. 1, the fired heater 170 is configured to combust a fuel stream 424 and a portion of the off-gas 229 produced by the oxygen transport membrane based reforming system using air 175 as the oxidant to heat the process steam 172 to superheated steam 150. In the illustrated embodiment, a source of air 175 is heated in the fired heater 170 to produce a heated air stream 176 to be used as the oxidant in the fired heated 170. The mixed feed stream 160 is also heated in the fired heater 170 producing a heated mixed feed stream 180. The heated mixed feed stream 180 has a temperature preferably from about 450 °C to about 650 °C and more preferably a temperature from about 500 °C to about 600 °C. Alternatively, the steam superheater and mixed feed heater could be disposed in the duct downstream from the OTM reforming reactor and utilize oxygen depleted air stream 124 as heat source (not shown).

The illustrated embodiment of the oxygen transport membrane based reforming system 100 comprises two reactors (200, 210) disposed in a single reactor housing 201. The first reactor is a reforming reactor 200 which comprises reforming catalyst containing tubes configured to reform the heated mixed feed stream 180 containing a hydrocarbon feed and steam in the presence of a conventional reforming catalyst disposed in the reforming tubes and heat to produce a reformed synthesis gas stream 205. The temperature of the reformed hydrogen-rich synthesis gas stream 205 is typically designed to be from about 650 °C to about 900 °C, and more preferably about 870 and 900°C. A distinctive feature of this oxygen transport membrane based reforming system 100 is that no portion of the syngas stream 205 is fed to the oxygen transport membrane reactor 210. Consequently, the pressure of the synthesis gas stream 205 leaving the reforming reactor 100 is not limited by the operating pressure of the oxygen transport membrane reactor 210. Generally, the pressure of the synthesis gas stream leaving the reforming reactor is greater than about 14.8 bar (200 psig) up to about 36.2 bar (510 psig), in another embodiment greater than about 18.3 bar (250 psig) up to about 36.2 bar (510 psig), and in another embodiment greater than about 21.7 bar (300 psig) up to about 36.2 bar (510 psig). The synthesis gas stream 205 primarily contains hydrogen, carbon monoxide, carbon dioxide, steam and unconverted methane. H₂/CO ratio of the synthesis gas stream 205 is typically from about 2.8 to 5.0, in another embodiment from about 2.8 to about 5.0, in another embodiment from about 3.0 to 5.0, in another embodiment from about 3.5 to 5, and in yet another embodiment from about 4.7 to about 5. Methane content of synthesis gas stream 205 depends on the operating pressure of the reforming reactor 200 and on the S/C ratio of the mixed feed 180. At operating pressures of about 14.8 bar (200 psig) and S/C ratio of 3, methane content of synthesis gas stream 205 is about 1.9 mol% (dry basis).

The second reactor in the illustrated embodiment is an oxygen transport membrane reactor 210 that is configured to provide a source of radiant heat to the reforming reactor 200. The oxygen transport membrane reactor 210 is a reactively driven oxygen transport membrane reactor that comprises a plurality of oxygen transport membrane elements or tubes disposed proximate to or in a juxtaposed orientation with respect to the reforming reactor 200. The oxygen transport membrane reactor 210 is configured to separate or permeate oxygen from the oxygen containing stream 115 contacting the oxidant side of the oxygen transport membrane elements or tubes to the reactant side of the oxygen transport membrane elements or tubes through oxygen ion transport. The permeated oxygen reacts with a hydrogen containing stream 222, at a pressure that ranges from about 2 bar (29 psig) to about 12 bar (175 psig), in another embodiment from about a pressure ranging from about 2 bar (29 psig) to about 3 bar (32 psig), on the reactant side of the oxygen transport membrane elements or tubes to produce the difference in oxygen partial pressure across the oxygen transport membrane element and to produce a reaction product stream 225 and heat.

In the illustrated embodiment, the low pressure hydrogen containing stream 222 is a hydrogen and light hydrocarbon containing stream that preferably includes a recirculated portion 226 of the synthesis gas product stream and optionally a light hydrocarbon containing gas 224. A portion of the reaction product stream 225 exiting the reactant side of the oxygen transport membrane elements or tubes of the oxygen transport membrane reactor 210 is an off-gas 227 that may be mixed with a supplementary natural gas fuel 228 to the duct burner 126. Another portion of the reaction product stream 225 exiting the reactant side of the oxygen transport membrane elements or tubes is an off-gas 229 that may be mixed with a supplementary natural gas fuel 124 to fired heater 170. Alternatively, the reaction product stream 225 may be directly blended with air stream 124 by replacing a portion of the oxygen transport membrane elements or tubes that form the oxygen transport membrane reactor 210 with porous ceramic tubes that allow reaction product stream 225 to diffuse into the depleted air stream 124 (not shown).

Preferably, the reforming reactor 200 and the oxygen transport membrane reactor 210 are arranged as sets of closely packed tubes in close proximity to one another. The tubes in reforming reactor 200 generally contain reforming catalyst. Oxygen transport membrane reactor 210 comprises a plurality of ceramic oxygen transport membrane tubes. The oxygen transport membrane tubes are preferably configured as multilayered ceramic tubes capable of conducting oxygen ions at an elevated operational temperature, wherein the oxidant side of the oxygen transport membrane tubes is the exterior surface of the ceramic tubes exposed to the heated oxygen containing stream and the reactant side or permeate side is the interior surface of the ceramic tubes. Within each of the oxygen transport membrane tubes are one or more catalysts that facilitate partial oxidation and/or reforming, as applicable. Although only three of the reforming tubes are illustrated in Fig. 1 in close proximity to four of the reforming oxygen transport membrane elements or tubes, there could be many of such oxygen transport membrane tubes and many reforming tubes in each oxygen transport membrane based reforming subsystem or assembly as would occur to those skilled in the art. Likewise, there could be multiple oxygen transport membrane based reforming sub-systems or assemblies used in industrial applications of the oxygen transport membrane based reforming system 100.

The oxygen transport membrane elements or tubes used in the embodiments disclosed herein preferably comprise a composite structure that incorporates a dense layer, a porous support and an intermediate porous layer located between the dense layer and the porous support. Each of the dense layer and the intermediate porous layer are capable of conducting oxygen ions and electrons at elevated operational temperatures to separate the oxygen from the incoming air stream. The porous support layer would thus form the reactant side or permeate side. The dense layer and the intermediate porous layer preferably comprise a mixture of an ionic conductive material and an electrically conductive material to conduct oxygen ions and electrons, respectively. The intermediate porous layer preferably has a lower permeability and a smaller average pore size than the porous support layer to distribute the oxygen separated by the dense layer towards the porous support layer. The preferred oxygen transport membrane tubes also include a mixed phase oxygen ion conducting dense ceramic separation layer comprising a mixture of a zirconia based oxygen ion conducting phase and a predominantly electronic conducting perovskite phase. This thin, dense separation layer is implemented on the thicker inert, porous support.

Oxidation catalyst particles or a solution containing precursors of the oxidation catalyst particles are optionally located in the intermediate porous layer and/or in the thicker inert, porous support adjacent to the intermediate porous layer. The oxidation catalyst particles contain an oxidation catalyst, such as gadolinium doped ceria, which are selected to promote oxidation of the partially reformed synthesis gas stream in the presence of the permeated oxygen when introduced into the pores of the porous support, on a side thereof opposite to the intermediate porous layer.

The endothermic heating requirements of the reforming process occurring in the reforming reactor 200 are supplied through radiation of some of the heat from the oxygen transport membrane reactor 210 together with the convective heat transfer provided by heated oxygen depleted retentate stream. Sufficient thermal coupling or heat transfer between the heat-releasing ceramic oxygen transport membrane tubes and the heat-absorbing catalyst containing reformer tubes must be enabled within the design of the present reforming system. A portion of the heat transfer between the ceramic oxygen transport membrane tubes and the adjacent or juxtaposed reforming catalyst containing reformer tubes is through the radiation mode of heat transfer whereby surface area, surface view factor, surface emissivity, and non-linear temperature difference between the tubes (e.g., Tₒₜₘ⁴-T_{reformer}⁴), are critical elements to achieve the desired thermal coupling. Surface emissivity and temperatures are generally dictated by tube material and reaction requirements. The surface area and surface view factor are generally dictated by tube arrangement or configuration within each module and the entire reactor. While there are numerous tube arrangements or configurations that could meet the thermal coupling requirements between the oxygen transport membrane tubes and the reformer tubes, a key challenge is to achieve a relatively high production rate per unit volume which, in turn, depends on the amount of active oxygen transport membrane area contained within the unit volume. An additional challenge to achieving the optimum thermal coupling performance is to optimize the size of the ceramic oxygen transport membrane tubes and the catalyst containing reformer tubes, and more particular the effective surface area ratio, A_{reformer}/Aₒₜₘ, of the respective tubes. Of course, such performance optimization must be balanced against the manufacturability requirements, costs, as well as the reliability, maintainability, operating availability of the modules and reactor.

The synthesis gas stream 205 produced by the reforming reactor 200 generally contains hydrogen, carbon monoxide, residual unconverted methane, steam, carbon dioxide and other constituents. A significant portion of the sensible heat from the synthesis gas stream 205 can be recovered using a heat exchange section or recovery train 250. Heat exchange section 250 is designed to cool the produced synthesis gas stream 205 exiting the reforming reactor 200. In this illustrated embodiment, the heat exchange section 250 is also designed such that in cooling the synthesis gas stream 205, process steam 172 is generated, the combined hydrocarbon feed stream 133 is preheated, and boiler feed water 255 and feed water 259 are heated.

To minimize metal dusting issues, the hot synthesis gas product stream 205, preferably at a temperature of from about 800 °C to about 900 °C is cooled to a temperature of about 400 °C or less in a Process Gas (PG) Boiler 252. The initially cooled synthesis gas product stream 254 is then used to preheat the combined hydrocarbon feed stream 133 in a feed preheater 134 and subsequently to preheat boiler feed water 255 in the economizer 256 and to heat the feed water stream 259 in feed water heater 258. In the illustrated embodiment, the boiler feed water stream 255 is preferably pumped using a feed water pump (not shown), heated in economizer 256 and sent to steam drum 257 while the heated feed water stream is sent to a de-aerator (not shown) that provides boiler feed water 255. Synthesis gas leaving the feed water heater 258 is preferably around 150 °C. It is cooled down to about 40 °C using a fin-fan cooler 261 and a synthesis gas cooler 264 fed by cooling water 266. The cooled synthesis gas 270 then enters a knock-out drum 268 where water is removed from the bottoms as process condensate stream 271 which, although not shown, is recycled for use as feed water, and the cooled synthesis gas 272 is recovered overhead.

A portion of the cooled synthesis gas stream 226 may optionally be recirculated to the reactor housing to form all or part of the low pressure hydrogen containing stream 222. Depending on the pressures of the reforming reactor 200, pressure of the recovered synthesis gas generally ranges from about 10 bar (145 psig) to about 35 bar (507 psig), in another embodiment from about 12 bar (175 psig) to about 30 bar (435 psig). The H₂/CO ratio of the final synthesis gas product produced in the described embodiment is typically from about 3.5 to 5.0.

Fig. 2 is a schematic illustration of the oxygen transport membrane based reforming system of Fig. 1 tailored for and integrated with a hydrogen production process. In many regards, this embodiment is similar to the embodiment of Fig. 1 and, for sake of brevity, the description of the common aspects of the two embodiments will not be repeated here, rather, the following discussion shall focus on the differences.

A significant portion of the sensible heat from the synthesis gas stream 205 can be recovered using a downstream heat recovery and hydrogen recovery section 400 which is designed to both cool the produced synthesis gas stream 205 exiting the reforming reactor 200 and produce a hydrogen product 500. In the embodiment of Fig. 2, the heat recovery and hydrogen recovery section 400 is also designed such that in cooling the synthesis gas stream 205, the combined hydrocarbon feed stream 403 is preheated, process steam 402 is generated, and boiler feed water 405 is also heated. As with the previously described embodiments, the hot synthesis gas product stream 205, preferably at a temperature between about 800 °C and 900 °C is cooled to a temperature of about 400 °C or less in a Process Gas (PG) Boiler 252. Steam 409 is added to the initially cooled synthesis gas product stream 254 which is then directed to a high temperature shift reactor 410 to generate additional hydrogen via the Water Gas Shift reaction:

CO + H₂O → CO₂ + H₂

Alternatively, the inlet temperature to the high temperature shift reactor 410 can be controlled by adding superheated steam (not shown) to the initially cooled synthesis gas product stream 254 ahead of entering the high temperature shift reactor 410. In the high temperature shift reactor 410, from about 20 to about 30% of the carbon monoxide is reacted to produce the hydrogen rich synthesis gas stream 412 containing from about 50 to about 60% molar hydrogen and having a H₂/CO ratio of from about 3.5 to about 21, in another embodiment from about 5 to about 20. Since the Water Gas Shift reaction is exothermic, the shifted synthesis gas stream 412 leaving the high temperature shift reactor 410 is at a temperature greater than the directly cooled synthesis gas product stream 254, and typically at a temperature of around 435°C. A portion of the sensible energy in this shifted synthesis gas 412 stream is then recovered by sequentially heating the combined hydrocarbon feed stream 403 in a feed preheater 414 and then preheating boiler feed water stream 416 in economizer 418. In the illustrated embodiment, the boiler feed water stream 416 is preferably pumped using a feed water pump 417, heated in economizer 418 and sent to steam drum 424 while make-up water stream 425 and steam 411 are sent to a de-aerator 420 that provides the boiler feed water 405. Shifted synthesis gas leaving the economizer 418 is then cooled down to about 38 °C using a synthesis gas cooler 426 fed by a source of cooling water 428. The cooled synthesis gas 430 then enters a knock-out drum 432 used to remove moisture as a condensate stream 434 which is recycled for use as feed water, and the cooled shifted synthesis gas 440 is recovered overhead. Steam from steam drum 424 is: (i) used by the de-aerator 420; (ii) added to the desulfurized hydrocarbon feed stream 141; (iii) added to the initially cooled synthesis gas stream 254 upstream of the shift reactor 410; and (iv) exported. In small hydrogen production plants, such as shown in Fig.2, it may be preferable to design the plant for little to no steam export. If there is excess steam that cannot be exported, it can be mixed with the shifted synthesis gas leaving the economizer 418 as quench steam and condensed in the synthesis gas cooler 426 or using a fin-fan cooler (not shown). When excess steam is required or desirable in larger hydrogen production plants, such steam can be made available by adding steam generation capabilities into a separate fired heater, similar to the fired heater arrangement in Fig. 1, or by adding a flue gas boiler disposed in the retentate duct 125 of the oxygen transport membrane based reforming system downstream of the reactor housing (not shown).

The cooled shifted synthesis gas stream 440 is then directed to a hydrogen pressure swing adsorption (H₂ PSA) unit 450 which produces a hydrogen gas stream 452 and a tail gas 454, which contains about 30% hydrogen, about 50% carbon dioxide and from about 10 to about 20% carbon monoxide and trace amounts of unreacted methane (<1%). A portion of the hydrogen gas becomes the hydrogen product 500 and the rest of the hydrogen gas 452B is directed to a hydrogen recycle compressor 453 and mixed with the natural gas feed 130 prior to desulfurization and reforming to produce the combined hydrocarbon feed stream 403. Depending on the operating pressures of the based reforming reactor 200, pressure of the hydrogen product generally ranges from about 10 bar (145 psig) to about 35 bar (507 psig), in another embodiment from about 12 bar (175 psig) to about 30 bar (435 psig). A portion or all of the tail gas 454 is directed to the oxygen transport membrane reactor 210 and mixed with a light hydrocarbon containing gas 224 to form part or all of the hydrogen containing stream 222. All or a portion of the tail gas 454 could constitute all or a portion of the fuel stream 128 feeding the duct burner 126.

Dry syngas is fed to a H₂ Pressure Swing Adsorption (PSA) unit, which generates high purity (>99.99%) H2. As mentioned above, the other species are recovered in the PSA tail gas. In one specific example, composition of the PSA tail gas, on a molar basis, was 4.4% CH₄, 9.5% CO, 44.1% CO₂, 40.1% H₂, 0.5% N₂, 1.4% H₂O. To achieve a H₂ recovery of about 80%, it is recommended that the minimum pressure of the dry syngas feeding the H₂ PSA be at least 180 psia. The PSA tail gas 454 is typically recovered at a pressure of about 5 psig and mixed with some NG 224 and sent to the OTM tubes 210 in the OTM reactor. Higher heating value of the PSA tail gas 454 is generally about 300 Btu/scf. About 60% of the incoming H2 & CO is combusted in the OTM tubes 210. The OTM tubes 210 generally contain catalyst to facilitate reforming of methane in the fuel stream 222. The exhaust 227 from the OTM tubes 210 has some residual heating value (40 - 100 Btu/scf) and can be used as fuel in the duct burner 126. If necessary, some NG 228 can be added to the duct burner 126 to increase the heating value of the fuel stream128.

The configuration shown in Figure 2 is typically representative of small H₂ plants producing less than 10 MMSCFD of H2. Typically for such plants, there may not be a user of the excess steam. Process conditions can be adjusted to eliminate steam export. Furthermore, it is desirable to minimize the capital cost of such small H2 plants. Accordingly, the configuration in Figure 2 has been optimized to minimize the number of distinct pieces of equipment. Those skilled in the art would recognize that several variations are possible, e.g. first cooling the syngas in a fin-fan air cooler to about 70°C before feeding the cooling water based syngas cooler; use of a de-aerator to maintain water quality.

Another difference between the embodiment of Fig. 1 and the embodiment shown in Fig. 2 relates to the steam handling and heating of the mixed feed stream 160. As indicated above, a portion of the steam 411 from steam drum 424 is used by the de-aerator 420 while a second portion of the steam 409 is added to the initially cooled synthesis gas stream 254 upstream of the shift reactor 410. Yet another portion of the steam 413 may be added to the desulfurized hydrocarbon feed stream which is then heated to a temperature preferably from about 475°C to about 650°C, and more preferably to a temperature from about 520°C to about 600°C by means of indirect heat exchange with the heated oxygen depleted retentate stream using steam coils 475 disposed in the retentate duct 125 of the oxygen transport membrane based reforming system downstream of the reactor housing.

An alternate embodiment is shown in Fig 3. In many regards, this embodiment is similar to the embodiment of Fig. 2 and thus the description of the common aspects of the two will not be repeated here. The difference between the embodiments shown in Figs. 2 and 3 is the addition of a low temperature shift reactor 462 in Fig. 3. This low temperature shift reactor 462 is added to the system to increase the conversion of carbon monoxide and produce more hydrogen, therefore reducing the amount of tail gas 454 and increasing the conversion efficiency (*i.e.* BTU of NG (hydrocarbon feed) per SCF of hydrogen produced) of the system. The addition of the low temperature shift reactor 462 improves the efficiency (BTU/SCF of hydrogen produced) by up to about 25%. In the embodiment shown in Fig. 3, the cooled synthesis gas 460 enters the low temperature shift reactor 462 at about 160°C where most of the remaining carbon monoxide, typically greater than 80% and preferably greater than 95% is reacted with water to produce more hydrogen and carbon dioxide, resulting in a synthesis gas stream 464 with a H₂/CO ratio higher than about 370 and less than 1% molar of carbon monoxide. The synthesis gas stream 464 leaves the low temperature shift reactor 462 at about 190°C and is then cooled down to about 38°C using a synthesis gas cooler 466 fed by a source of cooling water 468. The cooled shifted synthesis gas stream 430 then enters a knock-out drum 432 used to remove moisture as condensate stream 434 which is recycled for use as feed water, and the cooled shifted synthesis gas 320 is recovered overhead and sent to the H₂ PSA 450. Because of the addition of the low temperature shift reactor 462, the tail gas 454 composition is different from the previous embodiment, containing up to about 70% carbon dioxide and only trace amounts of carbon monoxide and methane (<1%).

It is recognized that the embodiments presented in Figures 2 and 3 can also be used to co-produce syngas and hydrogen. In this case, only the portion of synthesis gas for hydrogen production is subject to water gas shift reactions at high and optionally low temperatures. This shifted syngas is sent to a H₂ PSA unit which produces a hydrogen gas product and a tail gas. The rest of the synthesis gas product is cooled and conditioned for subsequent use in end applications including synthesis of chemicals and liquid fuels.

While the present invention has been characterized in various ways and described in relation to preferred embodiments, as will occur to those skilled in the art, numerous, additions, changes and modifications thereto can be made without departing from the scope of the present invention as set forth in the appended claims.

## Claims

1. A method for hydrogen production utilizing an oxygen transport membrane based reforming system (100), wherein said system comprises a reforming reactor (200) and a reactively-driven, catalyst containing oxygen transport membrane reactor (210) in close proximity to the reforming reactor, the oxygen transport membrane reactor comprising a plurality of oxygen transport membrane tubes defining an oxidant side and a permeate side and configured to separate oxygen from an oxygen containing stream contacting the oxidant side and permeate separated oxygen to the permeate side through oxygen ion transport, the oxidation catalyst being contained within the tubes on the permeate side of the oxygen transport membrane reactor, and the reforming reactor comprising a plurality of reforming catalyst containing tubes, the method comprising the steps of:
separating oxygen from an oxygen containing stream (115) with the catalyst containing oxygen transport membrane reactor to produce an oxygen permeate and an oxygen depleted retentate stream (124),;
feeding a fuel stream (222) to the permeate side of the oxygen transport membrane tubes and reacting same with the oxygen permeate to generate a reaction product stream and heat;
transferring the heat via convection to the oxygen depleted retentate stream and via radiation to the catalyst containing reforming reactor configured to produce a synthesis gas stream;
reforming a combined feed stream (180) comprising natural gas and steam in said reforming reactor in the presence of the reforming catalyst and radiant heat transferred from the oxygen transport membrane reactor to produce a reformed synthesis gas stream (205) comprising hydrogen and carbon monoxide;
treating the synthesis gas product stream in a separate high, medium and/or low temperature shift reactor (410, 462) to form a hydrogen-enriched synthesis gas stream (412, 464); and
treating the hydrogen-enriched synthesis gas stream in a hydrogen PSA (450); and
recovering a hydrogen product stream (452) and a tail gas stream (454);
wherein a portion of the fuel gas stream required for the oxygen transport membrane reactor is the tail gas stream from the hydrogen PSA, mixed with supplementary hydrocarbon fuel (224), wherein no portion of the reformed synthesis gas stream leaving the reforming reactor is recycled back to the oxygen transport membrane reactor, and wherein the reforming reactor and the oxygen transport membrane reactor are arranged as sets of closely packed tubes in close proximity to one another.

2. The method of claim 1 wherein the heat generated as a result of the reaction of the fuel stream (222) with permeated oxygen is transferred: (i) to the reforming reactor (200); (ii) to the unreformed fuel gas stream present in the reactively driven, catalyst containing oxygen transport membrane reactor (210); and (iii) to an oxygen depleted retentate stream.

3. The method of claim 1 wherein the pressure of the synthesis gas stream (205) leaving the reforming reactor is greater than 14.8 bar (200 psig) up to 36.2 bar (510 psig).

4. The method of claim 1 wherein the pressure of the synthesis gas stream (205) leaving the reforming reactor (205) is greater than 18.3 bar (250 psig) up to 36.2 bar (510 psig).

5. The method of Claim 1 further comprising the step of reheating the oxygen depleted stream (124) to a temperature of from 1050°C to 1200°C using a burner disposed within the oxygen transport membrane based reforming system (100), where the burner (126) is configured to combust a fuel stream (128) to heat the incoming oxygen containing stream via indirect heat exchange.

6. The method of claim 1 wherein the hydrogen to carbon monoxide ratio (H₂/CO) of the synthesis gas product stream (205, 254) is greater than 2.8 and is dependent on the reforming temperature and the amount of heat supplied to the reforming reactor (200) from the oxygen transport membrane reactor (210).

7. The method of claim 1 wherein the H₂/CO ratio of the final synthesis gas product (452) produced ranges from 3.00 to 5.00.

8. A hydrogen production system comprising:
an oxygen transport membrane based reactor housing (201) comprising:
a reforming reactor (200) disposed in the reactor housing and configured to reform a hydrocarbon containing feed stream (180) in the presence of a reforming catalyst disposed in the reforming reactor and heat to produce a reformed synthesis gas stream (205);
a reactively driven, catalyst containing oxygen transport membrane reactor (210) disposed in the reactor housing proximate the reforming reactor and configured to receive a hydrocarbon containing fuel stream (222) and react said stream with permeated oxygen and generate a first reaction product and heat;
a water gas shift reactor unit (410, 462); and
a hydrogen PSA unit (450),
wherein said reforming reactor is configured to produce synthesis gas at a pressure of greater than 14.8 bar (200 psig) up to 36.2 bar (510 psig) and no portion of said product synthesis gas is fed back to said oxygen transport membrane reactors, wherein the reactively driven, catalyst containing oxygen transport membrane reactor further comprises a plurality of oxidation catalyst containing oxygen transport membrane tubes defining an oxidant side and a permeate side and configured to separate oxygen from an oxygen containing stream (115) contacting the oxidant side and permeate separated oxygen to the permeate side through oxygen ion transport when subjected to the elevated operational temperature and the difference in oxygen partial pressure across the at least one oxygen transport membrane tube, wherein the reforming reactor comprises a plurality of reforming catalyst containing tubes, and wherein the reforming reactor and the oxygen transport membrane reactor are arranged as sets of closely packed tubes in close proximity to one another.

9. The method of claim 1,
wherein the catalyst containing oxygen transport membrane reactor (210) is reactively driven and is configured to separate oxygen from the oxygen containing stream (115) at the oxidant side of the reactively driven and catalyst containing oxygen transport membrane reactor and permeate the separated oxygen to the permeate side through oxygen ion transport when subjected to an elevated operational temperature and a difference in oxygen partial pressure across the oxygen transport membrane tubes;
wherein at least a portion of the synthesis gas product stream is treated in a separate high temperature shift reactor (410) followed by a low temperature shift reactor (462) to form said hydrogen-rich synthesis gas stream (464); and
and wherein the pressure of the synthesis gas stream (205) leaving the reforming reactor (200) is greater than 14.8 bar (200 psig) up to 36.5 bar (515 psig), and wherein the H₂/CO ratio of the final synthesis gas product (454) ranges from 2.8 to 5.0, wherein no portion of said product syngas is recycled back to said oxygen transport membrane reactor.

## Patentansprüche

1. Verfahren zur Wasserstofferzeugung unter Verwendung eines sauerstofftransportmembranbasierten Reformierungssystems (100), wobei das System einen Reformierungsreaktor (200) und einen reaktiv angetriebenen, Katalysator enthaltenden Sauerstofftransportmembranreaktor (210) in unmittelbarer Nähe des Reformierungsreaktors umfasst, wobei der Sauerstofftransportmembranreaktor eine Vielzahl von Sauerstofftransportmembranrohren umfasst, die eine Oxidationsmittelseite und eine Permeatseite definieren und konfiguriert sind, um Sauerstoff von einem sauerstoffhaltigen Strom, der die Oxidationsmittelseite kontaktiert, abzutrennen und abgetrennten Sauerstoff durch Sauerstoffionentransport zur Permeatseite zu permeieren, wobei der Oxidationskatalysator in den Rohren auf der Permeatseite des Sauerstofftransportmembranreaktors enthalten ist und der Reformierungsreaktor eine Vielzahl von Reformierungskatalysator enthaltenden Rohren umfasst, wobei das Verfahren die folgenden Schritte umfasst:
Abtrennen von Sauerstoff aus einem sauerstoffhaltigen Strom (115) mit dem Katalysator enthaltenden Sauerstofftransportmembranreaktor, um ein Sauerstoffpermeat und einen sauerstoffabgereicherten Retentatstrom (124) zu erzeugen;
Zuführen eines Brennstoffstroms (222) zu der Permeatseite der Sauerstofftransportmembranrohre und Umsetzen desselben mit dem Sauerstoffpermeat, um einen Reaktionsproduktstrom und Wärme zu erzeugen;
Übertragen der Wärme über Konvektion auf den sauerstoffabgereicherten Retentatstrom und über Strahlung auf den Katalysator enthaltenden Reformierungsreaktor, der konfiguriert ist, um einen Synthesegasstrom zu erzeugen;
Reformieren eines kombinierten Zufuhrstroms (180), der Erdgas und Dampf umfasst, in dem Reformierungsreaktor in Gegenwart des Reform ierungskatalysators und von Strahlungswärme, die von dem Sauerstofftransportmembranreaktor übertragen wird, um einen reformierten Synthesegasstrom (205) zu erzeugen, der Wasserstoff und Kohlenmonoxid umfasst;
Behandeln des Synthesegasproduktstroms in einem separaten Hoch-, Mittel- und/oder Niedertemperatur-Shiftreaktor (410, 462), um einen wasserstoffangereicherten Synthesegasstrom (412, 464) zu bilden; und
Behandeln des wasserstoffangereicherten Synthesegasstroms in einem Wasserstoff-PSA (450); und
Gewinnen eines Wasserstoffproduktstroms (452) und eines Endgasstroms (454);
wobei ein Teil des Brenngasstroms, der für den Sauerstofftransportmembranreaktor erforderlich ist, der Endgasstrom aus der Wasserstoff-PSA, gemischt mit zusätzlichem Kohlenwasserstoffbrennstoff (224), ist, wobei kein Teil des reformierten Synthesegasstroms, der den Reformierungsreaktor verlässt, in den Sauerstofftransportmembranreaktor zurückgeführt wird und wobei der Reformierungsreaktor und der Sauerstofftransportmembranreaktor als Sätze dicht gepackter Rohre in unmittelbarer Nähe zueinander angeordnet sind.

2. Verfahren nach Anspruch 1, wobei die Wärme, die als Ergebnis der Reaktion des Brennstoffstroms (222) mit permeiertem Sauerstoff erzeugt wird, übertragen wird: (i) zu dem Reformierungsreaktor (200); (ii) zu dem nicht reformierten Brenngasstrom, der in dem reaktiv angetriebenen, Katalysator enthaltenden Sauerstofftransportmembranreaktor (210) vorhanden ist; und (iii) zu einem sauerstoffabgereicherten Retentatstrom.

3. Verfahren nach Anspruch 1, wobei der Druck des Synthesegasstroms (205), der den Reformierungsreaktor verlässt, größer als 14,8 bar (200 psig) bis zu 36,2 bar (510 psig) ist.

4. Verfahren nach Anspruch 1, wobei der Druck des Synthesegasstroms (205), der den Reformierungsreaktor (205) verlässt, größer als 18,3 bar (250 psig) bis zu 36,2 bar (510 psig) ist.

5. Verfahren nach Anspruch 1, ferner umfassend den Schritt des Wiedererwärmens des sauerstoffabgereicherten Stroms (124) auf eine Temperatur von 1050 °C bis 1200 °C unter Verwendung eines Brenners, der innerhalb des sauerstofftransportmembranbasierten Reformierungssystems (100) angeordnet ist, wobei der Brenner (126) konfiguriert ist, um einen Brennstoffstrom (128) zu verbrennen, um den eingehenden sauerstoffhaltigen Strom über indirekten Wärmeaustausch zu erwärmen.

6. Verfahren nach Anspruch 1, wobei das Verhältnis von Wasserstoff zu Kohlenmonoxid (H₂/CO) des Synthesegasproduktstroms (205, 254) größer als 2,8 ist und von der Reformierungstemperatur und der Wärmemenge abhängt, die dem Reformierungsreaktor (200) von dem Sauerstofftransportmembranreaktor (210) zugeführt wird.

7. Verfahren nach Anspruch 1, bei dem das H₂/CO-Verhältnis des endgültigen Synthesegasendprodukts (452) im Bereich von 3,00 bis 5,00 liegt.

8. Wasserstoffherstellungssystem, umfassend:
ein sauerstofftransportmembranbasiertes Reaktorgehäuse (201), umfassend:
einen Reformierungsreaktor (200), der in dem Reaktorgehäuse angeordnet ist und konfiguriert ist, um einen Kohlenwasserstoff enthaltenden Zufuhrstrom (180) in Gegenwart eines Reformierungskatalysators, der in dem Reformierungsreaktor angeordnet ist, und von Wärme zu reformieren, um einen reformierten Synthesegasstrom (205) zu erzeugen;
einen reaktiv angetriebenen, Katalysator enthaltenden Sauerstofftransportmembranreaktor (210), der in dem Reaktorgehäuse in der Nähe des Reform ierungsreaktors angeordnet ist und konfiguriert ist, um einen Kohlenwasserstoff enthaltenden Brennstoffstrom (222) aufzunehmen und den Strom mit permeiertem Sauerstoff umzusetzen und ein erstes Reaktionsprodukt und Wärme zu erzeugen;
eine Wassergas-Shiftreaktoreinheit (410, 462); und
eine Wasserstoff-PSA-Einheit(450),
wobei der Reformierungsreaktor konfiguriert ist, um Synthesegas bei einem Druck von mehr als 14,8 bar (200 psig) bis zu 36,2 bar (510 Psig) zu erzeugen, und kein Teil des Produktsynthesegases zu den Sauerstofftransportmembranreaktoren zurückgeführt wird, wobei der reaktiv angetriebene, Katalysator enthaltende Sauerstofftransportmembranreaktor ferner eine Vielzahl von Oxidationskatalysator enthaltenden Sauerstofftransportmembranrohren umfasst, die eine Oxidationsmittelseite und eine Permeatseite definieren und konfiguriert sind, um Sauerstoff von einem sauerstoffhaltigen Strom (115), der die Oxidationsmittelseite kontaktiert, abzutrennen und abgetrennten Sauerstoff durch Sauerstoffionentransport zur Permeatseite zu permeieren, wenn sie der erhöhten Betriebstemperatur und der Differenz beim Sauerstoffpartialdruck über das mindestens eine Sauerstofftransportmembranrohr ausgesetzt sind, wobei der Reformierungsreaktor eine Vielzahl von Reformierungskatalysator enthaltenden Rohren umfasst und wobei der Reformierungsreaktor und der Sauerstofftransportmembranreaktor als Sätze von dicht gepackten Rohren in unmittelbarer Nähe zueinander angeordnet sind.

9. Verfahren nach Anspruch 1,
wobei der Katalysator enthaltende Sauerstofftransportmembranreaktor (210) reaktiv angetrieben wird und konfiguriert ist, um Sauerstoff von dem Sauerstoff enthaltenden Strom (115) an der Oxidationsmittelseite des reaktiv angetriebenen und Katalysator enthaltenden Sauerstofftransportmembranreaktors abzutrennen und den abgetrennten Sauerstoff durch Sauerstoffionentransport zur Permeatseite zu permeieren, wenn er einer erhöhten Betriebstemperatur und einer Differenz beim Sauerstoffpartialdruck über die Sauerstofftransportmembranrohre ausgesetzt ist;
wobei mindestens ein Teil des Synthesegasproduktstroms in einem separaten Hochtemperatur-Shiftreaktor, (410) gefolgt von einem Niedertemperatur-Shiftreaktor (462) behandelt wird, um den wasserstoffreichen Synthesegasstrom (464) zu bilden; und
und wobei der Druck des Synthesegasstroms (205), der den Reformierungsreaktor (200) verlässt, größer als 14,8 bar (200 psig) bis zu 36,5 bar (515 psig) ist und wobei das H₂/CO-Verhältnis des Synthesegasendprodukts (454) im Bereich von 2,8 bis 5,0 liegt, wobei kein Teil des Produktsynthesegases in den Sauerstofftransportmembranreaktor zurückgeführt wird.

## Revendications

1. Procédé de production d'hydrogène utilisant un système de reformage basé sur une membrane de transport d'oxygène (100), dans lequel ledit système comprend un réacteur de reformage (200) et un réacteur à membrane de transport d'oxygène contenant un catalyseur, entraîné de manière réactive (210) à proximité immédiate du réacteur de reformage, le réacteur à membrane de transport d'oxygène comprenant une pluralité de tubes à membrane de transport d'oxygène définissant un côté oxydant et un côté perméat et configurés pour séparer l'oxygène d'un courant contenant de l'oxygène venant en contact avec le côté oxydant et faire s'infiltrer l'oxygène séparé vers le côté perméat par l'intermédiaire d'un transport d'ions oxygène, le catalyseur d'oxydation étant contenu au sein des tubes sur le côté perméat du réacteur à membrane de transport d'oxygène, et le réacteur de reformage comprenant une pluralité de tubes contenant un catalyseur de reformage, le procédé comprenant les étapes consistant à :
séparer l'oxygène d'un courant contenant de l'oxygène (115) avec le réacteur à membrane de transport d'oxygène contenant un catalyseur pour produire un perméat d'oxygène et un courant de rétentat appauvri en oxygène (124), ;
alimenter un courant de combustible (222) vers le côté perméat des tubes à membrane de transport d'oxygène et faire réagir celui-ci avec le perméat d'oxygène pour générer un courant de produit de réaction et de la chaleur ;
transférer la chaleur par l'intermédiaire d'une convection vers le courant de rétentat appauvri en oxygène et par l'intermédiaire d'un rayonnement vers le réacteur de reformage contenant un catalyseur configuré pour produire un courant de gaz de synthèse ;
reformer un courant d'alimentation combiné (180) comprenant du gaz naturel et de la vapeur dans ledit réacteur de reformage en présence du catalyseur de reformage et de la chaleur rayonnante transférée du réacteur à membrane de transport d'oxygène pour produire un courant de gaz de synthèse reformé (205) comprenant de l'hydrogène et du monoxyde de carbone ;
traiter le courant de produit de gaz de synthèse dans un réacteur de conversion indépendant (410, 462) à haute, moyenne et/ou basse température pour former un courant de gaz de synthèse enrichi en hydrogène (412, 464) ; et
traiter le courant de gaz de synthèse enrichi en hydrogène dans une PSA hydrogène (450); et
récupérer un courant de produit d'hydrogène (452) et un courant de gaz résiduaire (454) ;
dans lequel une partie du courant de gaz combustible requis pour le réacteur à membrane de transport d'oxygène est le courant de gaz résiduaire provenant de la PSA hydrogène, mélangé à un combustible hydrocarbure supplémentaire (224), dans lequel aucune partie du courant de gaz de synthèse reformé quittant le réacteur de reformage n'est recyclée vers le réacteur à membrane de transport d'oxygène, et dans lequel le réacteur de reformage et le réacteur à membrane de transport d'oxygène sont agencés en tant qu'ensembles de tubes étroitement groupés à proximité immédiate les uns des autres.

2. Procédé selon la revendication 1 dans lequel la chaleur générée en conséquence de la réaction du courant de combustible (222) avec l'oxygène infiltré est transférée : (i) vers le réacteur de reformage (200) ; (ii) vers le courant de gaz combustible non reformé présent dans le réacteur à membrane de transport d'oxygène contenant un catalyseur, entraîné par réaction (210) ; et (iii) vers un courant de rétentat appauvri en oxygène.

3. Procédé selon la revendication 1 dans lequel la pression du courant de gaz de synthèse (205) quittant le réacteur de reformage est supérieure à 14,8 bar (200 psi manométriques) jusqu'à 36,2 bar (510 psi manométriques).

4. Procédé selon la revendication 1 dans lequel la pression du courant de gaz de synthèse (205) quittant le réacteur de reformage (205) est supérieure à 18,3 bar (250 psi manométriques) jusqu'à 36,2 bar (510 psi manométriques).

5. Procédé selon la revendication 1 comprenant en outre l'étape consistant à rechauffer le courant appauvri en oxygène (124) à une température allant de 1050 °C à 1200 °C en utilisant un brûleur disposé au sein du système de reformage basé sur une membrane de transport d'oxygène (100), où le brûleur (126) est configuré pour brûler un courant de combustible (128) pour chauffer le courant contenant de l'oxygène entrant par l'intermédiaire d'un échange thermique indirect.

6. Procédé selon la revendication 1 dans lequel le rapport de l'hydrogène au monoxyde de carbone (H₂/CO) du courant de produit de gaz de synthèse (205, 254) est supérieur à 2,8 et dépend de la température de reformage et de la quantité de chaleur alimentée au réacteur de reformage (200) à partir du réacteur à membrane de transport d'oxygène (210).

7. Procédé selon la revendication 1 dans lequel le rapport H₂/CO du produit de gaz de synthèse final (452) produit va de 3,00 à 5,00.

8. Système de production d'hydrogène comprenant :
un logement de réacteur à base de membrane de transport d'oxygène (201) comprenant :
un réacteur de reformage (200) disposé dans le logement de réacteur et configuré pour reformer un courant d'alimentation contenant un hydrocarbure (180) en présence d'un catalyseur de reformage disposé dans le réacteur de reformage et de chaleur pour produire un courant de gaz de synthèse reformé (205) ;
un réacteur à membrane de transport d'oxygène contenant un catalyseur, entraîné par réaction (210) disposé dans le logement de réacteur à proximité du réacteur de reformage et configuré pour recevoir un courant de combustible contenant un hydrocarbure (222) et faire réagir ledit courant avec de l'oxygène infiltré et générer un premier produit de réaction et de la chaleur ;
une unité de réacteur de conversion à la vapeur d'eau (410, 462) ; et
une unité de PSA hydrogène (450),
dans lequel ledit réacteur de reformage est configuré pour produire un gaz de synthèse à une pression supérieure à 14,8 bar (200 psi manométriques) jusqu'à 36,2 bar (510 psi manométriques) et aucune partie dudit gaz de synthèse de produit n'est réalimentée vers lesdits réacteurs à membrane de transport d'oxygène, dans lequel le réacteur à membrane de transport d'oxygène contenant un catalyseur, entraîné par réaction, comprend en outre une pluralité de tubes à membrane de transport d'oxygène contenant un catalyseur d'oxydation définissant un côté oxydant et un côté perméat et configurés pour séparer l'oxygène d'un courant contenant de l'oxygène (115) venant en contact avec le côté oxydant et l'oxygène séparé de perméat vers le côté perméat par l'intermédiaire d'un transport d'ions oxygène lorsqu'ils sont soumis à la température opérationnelle élevée et à la différence de pression partielle en oxygène à travers l'au moins un tube à membrane de transport d'oxygène, dans lequel le réacteur de reformage comprend une pluralité de tubes contenant un catalyseur de reformage, et dans lequel le réacteur de reformage et le réacteur à membrane de transport d'oxygène sont agencés en tant qu'ensembles de tubes étroitement groupés à proximité immédiate les uns des autres.

9. Procédé selon la revendication 1,
dans lequel le réacteur à membrane de transport d'oxygène contenant un catalyseur (210) est entraîné par réaction et est configuré pour séparer l'oxygène du courant contenant de l'oxygène (115) au niveau du côté oxydant du réacteur à membrane de transport d'oxygène entraîné par réaction et contenant un catalyseur et faire infiltrer l'oxygène séparé vers le côté perméat par l'intermédiaire d'un transport d'ions oxygène lorsqu'il est soumis à une température opérationnelle élevée et à une différence de pression partielle en oxygène à travers les tubes à membrane de transport d'oxygène ;
dans lequel au moins une partie du courant de produit de gaz de synthèse est traitée dans un réacteur de conversion à haute température indépendant (410) suivi par un réacteur de conversion à basse température (462) pour former ledit courant de gaz de synthèse riche en hydrogène (464) ; et
et dans lequel la pression du courant de gaz de synthèse (205) quittant le réacteur de reformage (200) est supérieure à 14,8 bar (200 psi manométriques) jusqu'à 36,5 bar (515 psi manométriques), et dans lequel le rapport H₂/CO du produit de gaz de synthèse final (454) va de 2,8 à 5,0, dans lequel aucune partie dudit gaz de synthèse de produit n'est recyclée vers ledit réacteur à membrane de transport d'oxygène.
